# EUROPÄISCHE PATENTANMELDUNG

(11) **EP 4 360 421 A2**
(43) Veröffentlichungstag der Anmeldung: **01.05.2024**
(21) Anmeldenummer: 23000136.4
(22) Anmeldetag: 04.10.2023
(51) Int. Cl.: A01B 71/00, A01D 69/02

(54) **ANBAUGERÄT**

(30) Priorität: 06.10.2022 DE 202022002184 U
(71) Anmelder: Barlage, Wilfried, 49626 Berge (DE)
(72) Erfinder: Barlage, Wilfried, 49626 Berge (DE)

(57) **Zusammenfassung**

Die Erfindung betrifft ein geschobenes oder gezogenes Anbaugerät (1) zum Anbau an ein selbstfahrendes Trägerfahrzeug wie z.B. ein Traktor, Radlader oder Kommunalfahrzeug welches mindestens ein angetriebenes rotierendes Arbeitswerkzeug (4) aufweist, dadurch gekennzeichnet, dass der Antrieb des Arbeitswerkzeugs (4) durch eine elektrische Antriebseinheit (9) erfolgt die wenigstens einen elektrischen Pufferspeicher (25) aufnehmen kann

## Beschreibung

Die Erfindung betrifft eine an einem Trägerfahrzeug angebautes geschobenes oder gezogenes Anbaugerät, wobei die Arbeitswerkzeuge über eine Batteriemotoreinheit elektrisch angetrieben wird.

Es sind handgeführte Arbeitsgeräte wie z.B. Rasenmäher oder Bodenfräsen bekannt, bei der die Arbeitswerkzeuge wie z.B. Messer elektrisch angetrieben werden. Diese bekannten handgeführten Arbeitswerkzeuge werden über ein elektrisches Versorgungsnetz oder auch über integrierte Batterien mit elektrischer Energie versorgt.

Für aufwendigere Arbeiten gibt es kleine Anbaugeräte mit beweglichen Arbeitswerkzeugen z.B. in Form eines Anbau-Schlegelmulchers, die von einem Trägerfahrzeug wie z.B. Kleintraktor, Quad, Radlader, oder Kommunalfahrzeug geschoben bzw. gezogen werden. Bei diesen beispielhaften Anbau-Schlegelmulchern ist es Stand der Technik, dass sie als Arbeitswerkzeug einen quer zur Maschinenlaufrichtung orientierten Mulchrotor tragen. Durch die Drehung des Mulchrotors wird der Bewuchs auf der bearbeiteten Fläche auf eine voreingestellte Höhe ab geschlegelt und zerkleinert. Das jeweiligen Arbeitswerkzeug wird üblicherweise über einen Hydraulikmotor angetrieben. Die hydraulische Energie stellt das Trägerfahrzeug durch eine standardisierte Ankopplung des Anbaugeräts an das fahrzeugseitige Hydrauliksystem zur Verfügung. Als weiteres sind Anbaugeräte mit einem auf dem Anbaugerät installierten mit Verbrennung- oder Elektromotor betriebenen Hydraulikaggregat bekannt, welches die notwendige hydraulische Energie für die Arbeitswerkzeuge zur Verfügung stellt.

Die bekannten Trägerfahrzeuge sind üblicherweise mit Verbrennungsmotoren ausgestattet, die über Energiewandlung zum einen die Antriebskraft für das Trägerfahrzeug sowie weitere mechanische und hydraulische Antriebsenergie für die Arbeitswerkzeuge der Anbaugeräte bereitstellt. Diese bekannten Trägerfahrzeuge erzeugen aufgrund des Verbrennungsmotors sowohl gesundheitsschädliche Lärmemissionen wie auch Abgasemissionen. Daher sind seit geraumer Zeit auch neue emissionsarme bzw. emissionslose Trägerfahrzeuge wie z.B. Traktoren, Radlader oder Kommunalfahrzeuge im Markt verfügbar. Diese neuen Trägerfahrzeuge werden überwiegend elektrisch angetrieben und weisen einen integrierten Energiespeicher in Form von Batterien auf. Diese neuen Trägerfahrzeuge weisen ebenfalls eine hydraulische Energiequelle zum Betrieb von derzeit bekannten Arbeitsgeräten auf, allerdings ist die Energiewandlung von elektrischer Energie in hydraulischer Energie sehr ineffizient, sodass die Gesamtlaufzeit des Trägerfahrzeugs mit hydraulisch angetriebenen Arbeitsgeräten äußerst gering und somit nur bedingt praxistauglich ist. Daher bieten einige der elektrisch angetriebenen Trägerfahrzeuge auch neben der standardisierten elektrischen 12V Energiequelle eine zweite leistungsstarke elektrische Energiequelle an. Die standardisierte 12V Energiequelle ist nur für geringe elektrische Leistungen wie z.B. für Fahrlicht ausgelegt und kann zum Betrieb von elektrischen Arbeitswerkzeugen in Anbaugeräten nur sehr bedingt genutzt werden. Die zweite neue elektrische Energiequelle im Trägerfahrzeug ist dagegen speziell für elektrische Arbeitswerkzeuge in Anbaugeräten ausgelegt und soll dadurch die hydraulische Energiequelle substituieren. Dadurch wird die Gesamtlaufzeit des Trägerfahrzeugs mit einem elektrisch betriebenen Anbaugerät deutlich erhöht. Allerdings gibt es bei den verschiedenen Trägerfahrzeugen keine standardisierte zweite Energiequelle, sodass hier unterschiedliche elektrische Spannungen bereitgestellt werden. Das hat zur Folge, dass die Elektromotoren in den Anbaugeräte auf das jeweilige Trägerfahrzeug abgestimmt werden muss. Das führt zu dem Nachteil das zum einen die Anbaugeräte nicht mehr in bekannter Form mit verschiedenen Trägerfahrzeugen betrieben werden können und zum anderen die Herstellung der individuellen Anbaugeräte aufwendiger und auch in der Beschaffung der individuellen elektrischen Komponenten teurer ist.

In der Offenlegungsschrift DE 100 10 819 A1 wird ein Traktor mit Stromsteckdose beschrieben an dem Anbaugeräte mit elektrisch angetriebenen rotierenden Arbeitselementen angebaut werden. Die Spannung für die elektrischen Antriebselemente des Anbaugeräts wird traktorseitig über eine Stromsteckdose bereitgestellt und auch geregelt. Durch Veränderung der traktorseitig anstehenden Spannung wird die Drehzahl der elektrischen Antriebselemente gesteuert. Die Regelung erfolgt mittels eines auf dem Traktor installierten Jobrechner. Dabei muss \ der Hersteller des Anbaugeräts immer eine Steuerungs-Software für den traktorseitigen Jobrechner bereitstellen. Aufgrund der fehlenden Standardisierung von traktorseitigen Stromsteckdosen und Jobrechnem haben sich derartige Systeme nicht im Markt etabliert. Des Weiteren sind derartige Anbaugeräte bezüglich aufwendigerer Herstellung und Programmierung von Software in ihrer Beschaffung wesentlich teurer gegenüber Standard-Anbaugeräten. Ein weiterer Nachteil ergibt sich daraus, dass das Anbaugerät nur mit einem Traktor mit entsprechender Stromsteckdose und Jobrechner und nicht mit einem Standard-Traktoren betrieben werden kann.

Der Erfindung liegt daher die Aufgabe zugrunde, ein Anbaugerät mit elektrischen Arbeitswerkzeugen zu schaffen, dass mit unterschiedlichsten Trägerfahrzeugen betrieben werden kann und unterschiedlichste elektrische Energiequellen nutzen kann.

Diese Aufgabe wird erfindungsgemäß dadurch gelöst, dass das Anbaugerät gemäß Anspruch 1 über mindestens eine elektrische Antriebseinheit verfügt, weiterhin einen Pufferspeicher für elektrische Energie sowie eine Ladeeinheit für unterschiedlichste elektrische Spannungen aufweist. Der Pufferspeicher versorgt die elektrische Antriebseinheit mit Energie, dadurch kann die Antriebseinheit vorteilhaft auch autark betrieben werden. Die Ladeeinheit kann mit unterschiedlichsten elektrischen Energiequellen verschiedener Trägerfahrzeuge oder auch weiterer Energiequellen gekoppelt werden und den Pufferspeicher z.B. während der Arbeit mit elektrischer Energie versorgen. Weiterhin kann die Ladeeinheit den Pufferspeicher vorteilhaft z.B. durch Anschluss an ein öffentliches elektrisches Versorgungsnetz auch ohne Trägerfahrzeug beladen. In einer weiteren vorteilhaften Ausführung kann die Antriebseinheit auch ohne Pufferspeicher betrieben werden indem sie direkt über das Trägerfahrzeug mit Energie versorgt wird.

Die Antriebseinheit wird weiter vorteilhaft z.B. auch in handgeführten Arbeitsgeräten eingesetzt. Dadurch werden sie in großen Stückzahlen produziert, sind leicht zu beschaffen und zudem preisgünstig. Durch Getriebe die mit der Antriebseinheit verbunden sind, kann die Ausgangsdrehzahl vorteilhaft auf die notwendige Drehzahl der Arbeitswerkzeuge angepasst werden.

Die Erfindung soll anhand eines Ausführungsbeispiels anhand rein schematischer Zeichnungen näher erläutert werden. Die entsprechenden Zeichnungen zeigen:
- Fig. 1: eine isometrische Ansicht des erfindungsgemäßen Anbaugerätes von hinten gesehen
- Fig. 2: eine isometrische Ansicht des erfindungsgemäßen Anbaugerätes von vorne
- Fig. 3: eine erste schematische Steuerung der Antriebseinheit
- Fig. 4: eine weitere schematische Steuerung der Antriebseinheit
- Fig. 5: eine weitere schematische Steuerung der Antriebseinheit
- Fig. 6a: eine isometrische schematische Schnittansicht der Antriebseinheit
- Fig. 6b: eine isometrische schematische Schnittansicht der Antriebseinheit
- Fig. 7: eine isometrische schematische Ansicht der Antriebseinheit

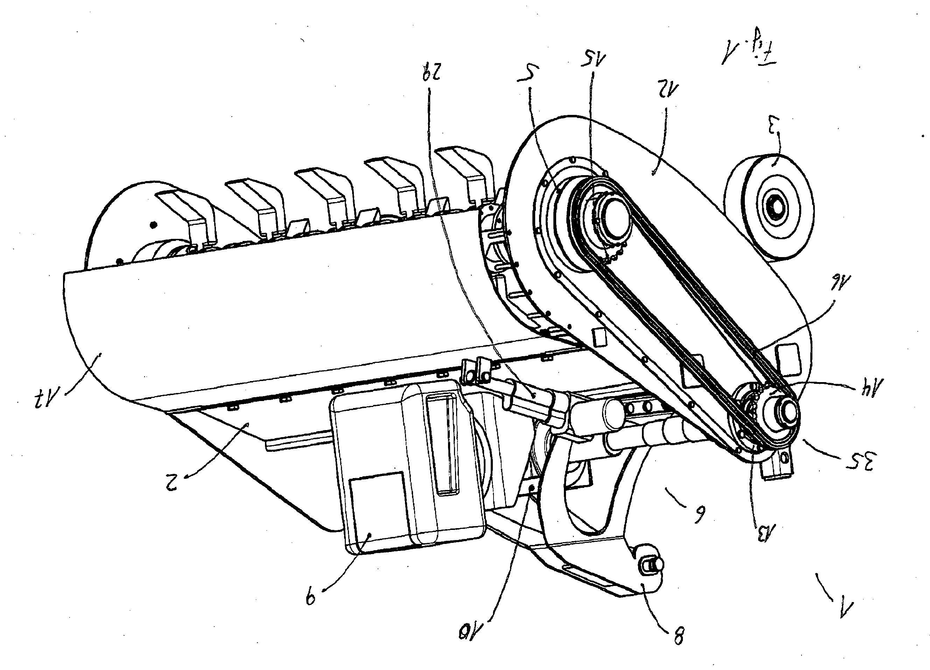

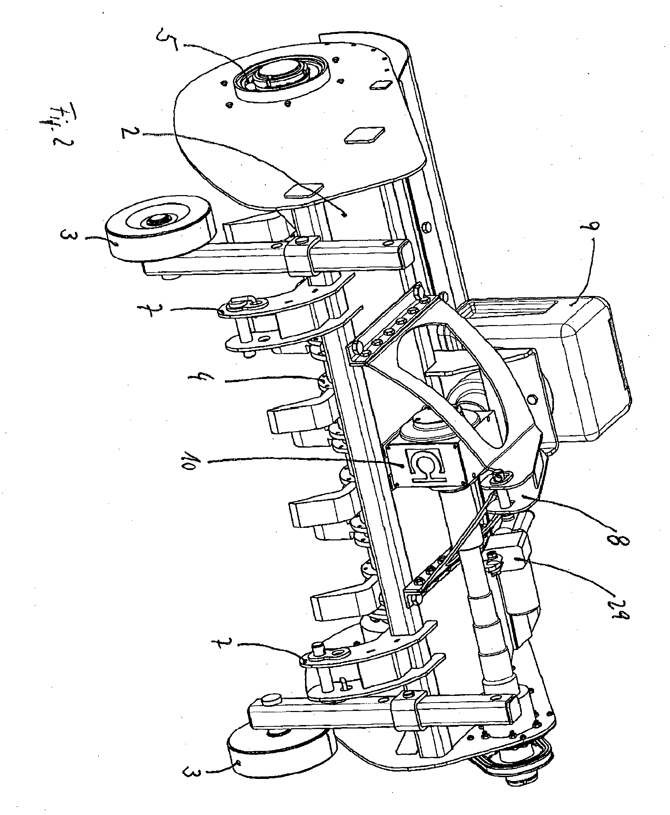

Das in Fig. 1 und Fig. 2 dargestellte Anbaugerät 1 ist dazu bestimmt, von einem selbstfahrenden Trägerfahrzeug auf dem Boden gezogen zu werden, um mittels eines rotierenden Arbeitswerkzeug 4 den Bewuchs auf der zu bearbeiteten Fläche auf einer voreingestellten Höhe ab zu schlegeln und zu zerkleinern. Das Anbaugerät 1 besteht aus einem Gehäuse 2, welches zwei in der Höhe einstellbare Laufrollen 3 aufweist. Durch die Laufrollen 3 stützt sich das Anbaugerät 1 gegenüber dem Boden ab und gibt dadurch auch die Arbeitshöhe des Arbeitswerkzeugs 4 vor. Das Gehäuse 2 weist eine Anzahl von Bohrungen auf um weitere für den Betrieb notwendige Komponenten (z.B. Mulchrotor, Antriebskomponenten, etc.) mit entsprechenden Befestigungsmitteln aufzunehmen. Im Gehäuse 2 sind an den äußeren beiden Seiten jeweils koaxial zu einander angeordnete Radiallager 5 zur Aufnahme des Arbeitswerkzeugs 4 in Form eines Mulchrotors vorgesehen. Im vorderen mittigen Bereich des Gehäuses 2 ist eine mehrteilige Anbauaufnahme 6 bestehend aus zwei Unterlenkeraufnahmen 7 und einer Oberlenkeraufnahme 8 für ein Trägerfahrzeug befestigt. Die Anbauaufnahme 6 kann aufgrund verschiedenartiger Trägerfahrzeuge vorteilhaft unterschiedlich ausgeführt sein. Oberhalb des Gehäuses 2 ist mittig eine elektrische Antriebseinheit 9 angeordnet. Vor der Antriebseinheit 9 ist ein Winkelgetriebe 10 mit dem Gehäuse 2 verbunden. Die Antriebswelle 37 der Antriebseinheit 9 ist mit einer ersten Ausgangswelle des Winkelgetriebes 10 torsionsfest verbunden. Die zweite Ausgangswelle des Winkelgetriebes 10 ist mit einer Antriebswelle 11 torsionsfest verbunden. Die Antriebswelle 11 verläuft quer zum Gehäuse 2 und durchstößt die linke Gehäuseseite 12: Im Durchbruch der Gehäuseseite 12 wird die Antriebswelle 11 über ein Radiallager 13 gehalten. Am Ende der Antriebswelle 11 ist ein erstes Kettenrad 14 torsionsfest mit der Antriebswelle 11 verbunden. Ein weiteres Kettenrad 15 ist im linken Achsverlauf des Arbeitswerkzeuges 4 torsionsfest verbunden. Die beiden Kettenräder 14 und 15 sind mittels einer Kette 16 kraftschlüssig verbunden. Somit treibt die Antriebseinheit 9 über das Winkelgetriebe 10, die Antriebswelle 11 und dem Kettentrieb 35 bestehend aus 14, 15 und 16 das Arbeitswerkzeug 4 an. Der Kettenantrieb 35 ist hier nur beispielhaft aufgeführt, es können vorteilhaft auch Zahnriementriebe oder Kraftriementriebe oder vergleichbares eingesetzt werden. Über unterschiedliche Durchmesser der Kettenräder 14 und 15 können auch Unter- bzw. Übersetzungen realisiert werden.

Das Winkelgetriebe 10 kann ebenfalls als Untersetzungs- oder Übersetzungsgetriebe ausgeführt werden, somit kann die Drehzahl des Arbeitswerkzeugs 4 unterschiedlich gegenüber der Ausgangsdrehzahl der Antriebseinheit 15 sein. Im hinteren Bereich des Gehäuses 2 ist ein bewegliches Auswurfblech 17 angeordnet. Über ein längenveränderbares Stellmittel 29, welches zum einen gelenkig mit dem Auswurfblech 17 und zum anderen gelenkig mit dem Gehäuse 2 verbunden ist, wird das Auswurfblech und somit die Auswurfweite des Mulchgutes eingestellt. Das Stellmittel 29 ist vorteilhaft als elektrische Lineareinheit ausgeführt.

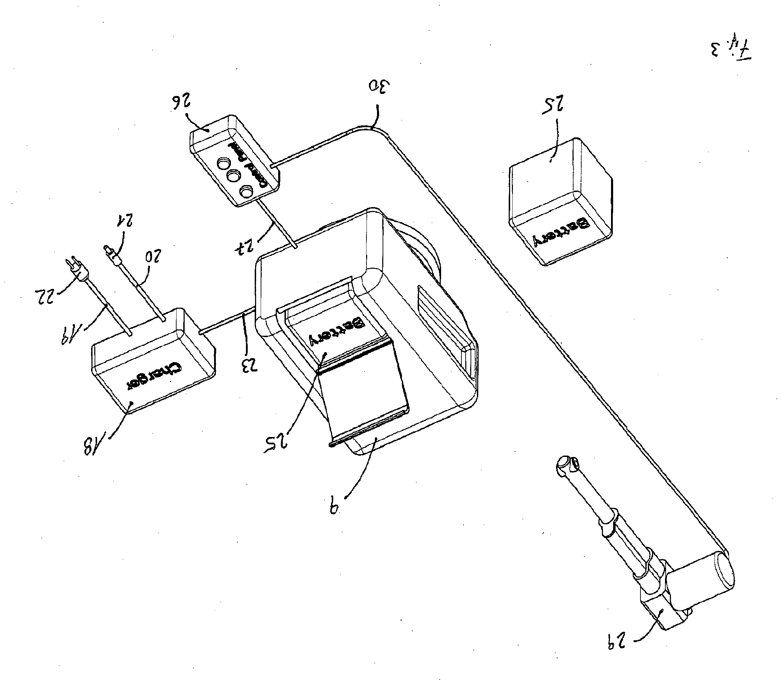

Fig. 3 zeigt die elektrische Antriebseinheit 9 mit einem integrierten Elektromotor 36 und einem integrierten Energiespeicher 25. Der integrierte Energiespeicher 25 versorgt die elektrische Antriebseinheit mit Energie. Der Energiespeicher 25 ist vorteilhaft wiederaufladbar und werkzeuglos austauschbar. So können beispielhaft auch mehrere Energiespeicher 25 auf dem Arbeitsgerät 1 mitgeführt werden. Bei Bedarf können entladene Energiespeicher 25 durch aufgeladene Energiespeicher 25 in der Antriebseinheit 9 getauscht werden. Weiterhin ist die Antriebseinheit 9 über eine Elektroleitung 23 mit einem auf dem Arbeitsgerät 1 montierten Ladegerät 18 verbunden. Das Ladegerät 18 verfügt vorteilhaft über mehrere weitere Elektrokabel 19 und 20 mit entsprechenden Elektrokupplungen 21 und 22. Aufgabe des Ladegerätes 18 ist es den in der Antriebseinheit 9 integrierten Energiespeicher 25 mit externer Energie zu versorgen. In einer weiteren vorteilhaften Ausführung kann das Ladegerät 18 auch die Antriebseinheit 9 direkt mit Energie versorgen. Das Ladegerät 18 ist in der Lage unterschiedlichste elektrische Spannungen aufzunehmen und in die für den Energiespeicher 25 bzw. für die Antriebseinheit 9 notwendige Spannung umzuwandeln. Über die Elektrokupplung 21 kann das Ladegerät 18 wahlweise mit der elektrischen Energiequelle des Trägerfahrzeugs oder über die Elektrokupplung 22 an ein öffentliches elektrisches Versorgungsnetz angeschlossen werden. Durch den Anschluss des Ladegerätes 18 an ein öffentliches elektrisches Versorgungsnetz kann der Energiespeicher 25 auch im Ruhezustand des Arbeitsgerätes 1 ohne Trägerfahrzeug aufgeladen werden. Die Antriebseinheit 9 ist weiterhin über.eine weitere Elektroleitung 27 mit einer Bedieneinheit 26 verbunden und wird dadurch mit elektrischer Energie versorgt. Die Bedieneinheit 26 ist wiederum über eine weitere Elektroleitung 30 mit dem elektrischen Stellmittel 29 verbunden. Die Bedieneinheit 26 dient zum einen dazu, den integrierten Elektromotor 36 in der Antriebseinheit 9 ein- bzw. auszuschalten und zum anderen weitere elektrische Verbraucher wie z.B. das Stellmittel 29 zu steuern. Die Bedieneinheit 26 kann vorteilhaft vom Trägerfahrzeug aus bedient werden.

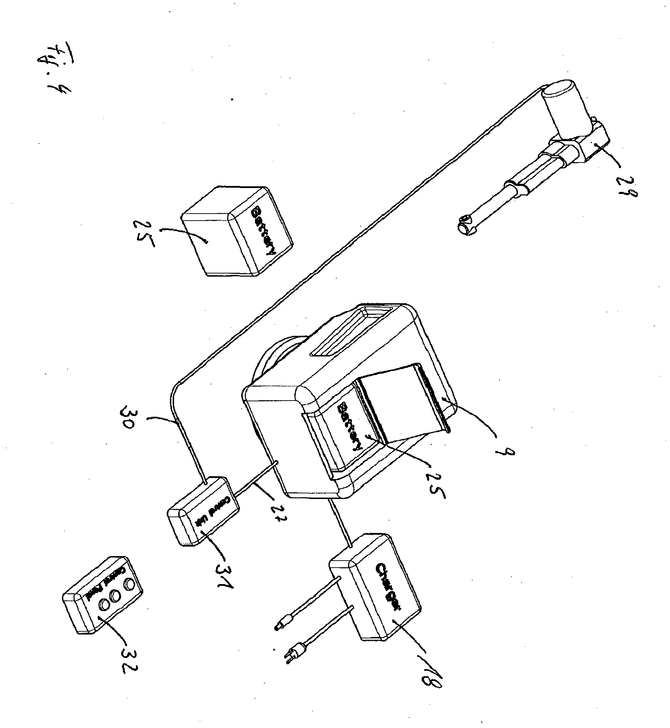

Fig 4. zeigt ein weiteres Ausführungsbeispiel der Antriebseinheit 9 in Verbindung mit einer Bedieneinheit 32. Hierbei ist die Antriebseinheit 9 über die Elektroleitung mit einer Steuereinheit 31 verbunden. Die Steuereinheit 31 ist wiederum über eine weitere Elektroleitung 30 mit dem elektrischen Stellmittel 29 verbunden. Die Bedieneinheit 32 und die Steuereinheit 31 sind vorteilhaft drahtlos (z.B. über Funk) miteinander verbunden. Die Bedieneinheit 32 sendet entsprechende Bediensignale an die Steuereinheit 32 die wiederum den integrierten Elektromotor 36 in der Antriebseinheit 9 ein- bzw. auszuschalten und zum anderen weitere elektrische Verbraucher wie z.B. das Stellmittel 29 steuert.

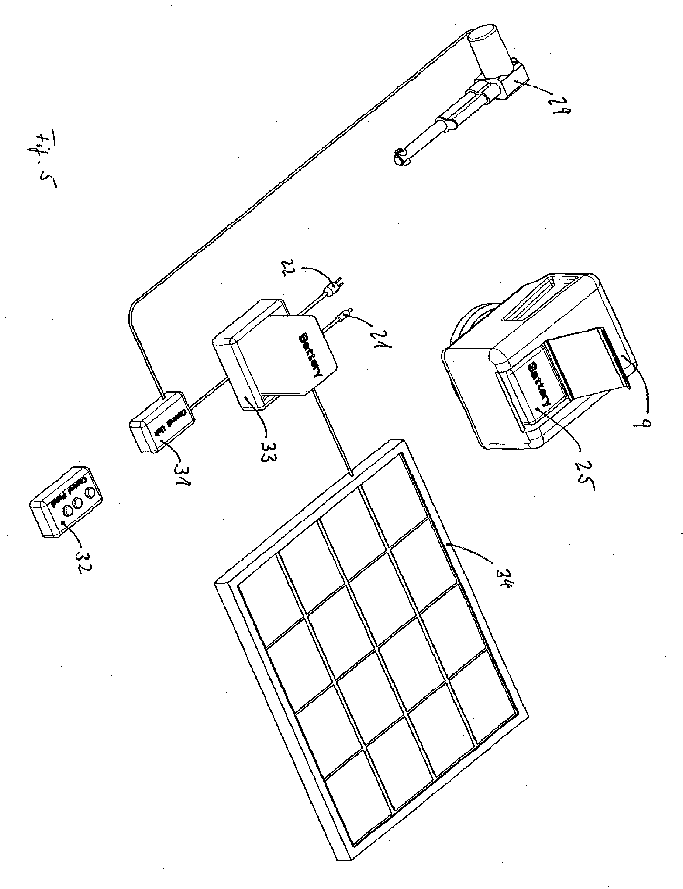

Fig. 5 zeigt die elektrische Antriebseinheit 9 mit einem integrierten Elektromotor 36 und einem integrierten Energiespeicher 25. Die Antriebseinheit 9 wird durch den integrierten Energiespeicher 25 mit Energie versorgt. Das in diesem Ausführungsbeispiels dargestellte Ladegerät 33 ist auf dem Arbeitsgerät 1 montiert, kann den Energiespeicher 25 direkt aufnehmen und ist nicht mit der Antriebseinheit 9 verbunden. Aufgabe des Ladegerätes 33 ist es den Energiespeicher 25 mit externer Energie wieder aufzuladen. Auf dem Arbeitsgerät 1 sind somit zwei Energiespeicher 25 im Wechseleinsatz. Der erste Energiespeicher 25 versorgt die Antriebseinheit 9 mit Energie und der zweite Energiespeicher 25 wird durch das Ladegerät 33 während der Arbeit aufgeladen. Dabei ist das Ladegerät 33 ebenfalls in der Lage unterschiedlichste elektrische Spannungen aufzunehmen und in die für den Energiespeicher 25 notwendige Spannung umzuwandeln. Über die Elektrokupplung 21 kann das Ladegerät 33 wahlweise mit der elektrischen Energiequelle des Trägerfahrzeugs oder über die Elektrokupplung 22 an ein öffentliches elektrisches Versorgungsnetz angeschlossen werden. Durch den Anschluss des Ladegerätes 33 an ein öffentliches elektrisches Versorgungsnetz kann der Energiespeicher 25 auch im Ruhezustand des Arbeitsgerätes 1 ohne Trägerfahrzeug aufgeladen werden. In einer weiteren vorteilhaften Ausführung kann das Ladegerät 33 auch über ein oder mehrere auf dem Arbeitsgerät 1 montierte Photovoltaikmodule 34 mit Energie versorgt werden. Ebenfalls ist durch das Photovoltaikmodul 34 ein Aufladen des Energiespeichers 25 ohne Trägerfahrzeug möglich. Das Ladegerät 33 kann vorteilhaft auch weitere elektrische Verbraucher wie z.B. die Steuereinheit 31 mit elektrischer Energie versorgen.

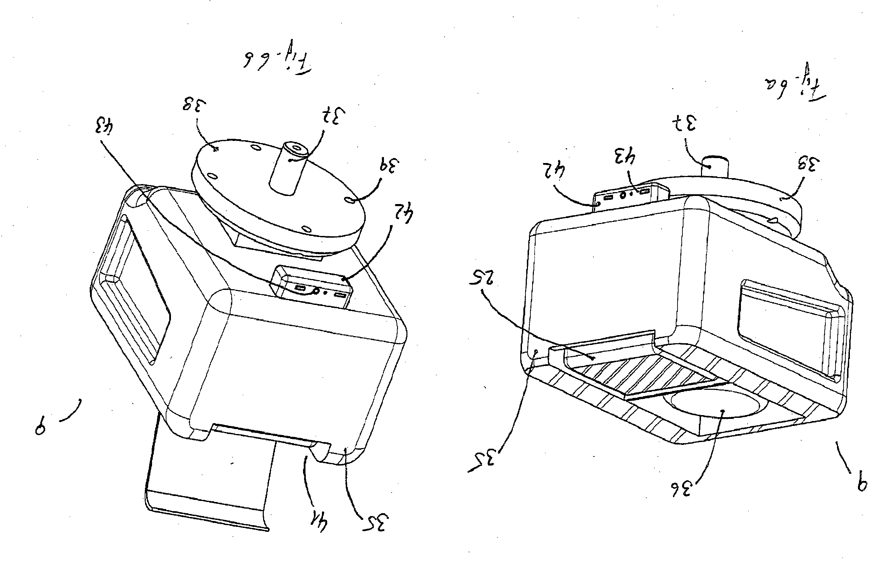

Fig. 6a und Fig. 6b zeigen eine beispielhafte Antriebseinheit 9 bestehend aus einem Antriebsgehäuse 35 in dem ein Elektromotor 36 verbaut ist. Die Antriebswelle 37 des Elektromotors 36 ragt aus dem unteren Antriebsgehäuse 9 hinaus. Weiterhin verfügt die Antriebseinheit 9 über einen Befestigungsflansch 38 mit Befestigungslöchern 39 zur Aufnahme der Antriebseinheit 9. Das Antriebsgehäuse 9 verfügt weiterhin einen mit einem Deckel 40 verschließbaren Batterieschacht 41. In dem Batterieschacht 41 wird der Energiespeicher 25 über entsprechende Führungen und elektrischen Kontakten aufgenommen und mit der Antriebseinheit 9 elektrisch verbunden. Im vorderen unteren Bereich der Antriebseinheit 9 ist weiterhin eine elektrische Verbindungseinheit 42 vorgesehen, die elektrische Kontakte 43 für z.B. eine Steuereinheit 31, für ein Ladegerät 18, 33 oder auch für weitere elektrische Verbraucher aufweisen.

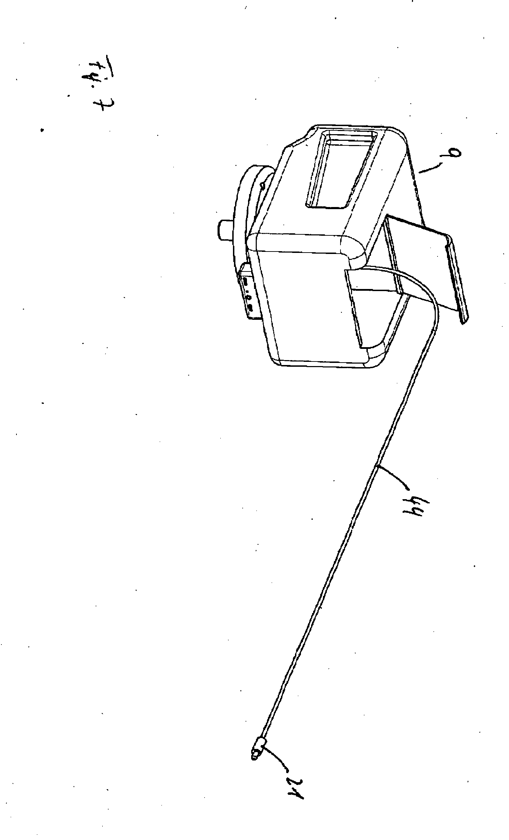

Fig. 7 zeigt eine weitere beispielhafte Ausführung der Antriebseinheit 9, bei der anstelle eines Energiespeichers ein Elektrokabel 44 über elektrische Kontakte mit der Antriebseinheit 15 verbunden ist. Am anderen Ende des Elektrokabels befindet sich die bereits bekannte Elektrokupplung 21, die mit dem Trägerfahrzeug verbunden wird. Somit versorgt das Trägerfahrzeug die Antriebseinheit 15 direkt mit Energie.

### Bezugszeichenliste

- 1: Anbaugerät
- 2: Gehäuse
- 3: Laufrollen
- 4: Arbeitswerkzeug
- 5: Radiallager
- 6: Anbauaufnahme
- 7: Unterlenkeraufnahme
- 8: Oberlenkeraufnahme
- 9: Antriebseinheit
- 10: Winkelgetriebe
- 11: Antriebswelle
- 12: Linke Gehäuseseite
- 13: Radiallager
- 14: Kettenrad
- 15: Kettenrad
- 16: Antriebskette
- 17: Auswurfblech
- 18: Ladegerät
- 19: Elektrokabel
- 20: Elektrokabel
- 21: Elektrokupplung
- 22: Elektrokupplung
- 23: Elektroleitung
- 25: Energiespeicher
- 26: Bedieneinheit
- 27: Elektroleitung
- 29: Elektrisches Stellmittel
- 30: Elektroleitung
- 31: Steuereinheit
- 32: Bedieneinheit
- 33: Ladegerät
- 34: Photovoltaikmodul
- 35: Antriebsgehäuse
- 36: Elektromotor
- 37: Antriebswelle
- 38: Befestigungsflansch
- 39: Befestigungslöcher
- 40: Deckel
- 41: Batterieschacht
- 42: Verbindungseinheit
- 43: Elektrische Kontakte
- 44: Elektrokabel

## Patentansprüche

1. Geschobenes oder gezogenes Anbaugerät (1) zum Anbau an ein selbstfahrendes Trägerfahrzeug wie z.B. ein Traktor, Radlader oder Kommunalfahrzeug welches mindestens ein angetriebenes rotierendes Arbeitswerkzeug (4) aufweist, **dadurch gekennzeichnet, dass** der Antrieb des Arbeitswerkzeugs (4) durch eine elektrische Antriebseinheit (9) erfolgt die wenigstens einen elektrischen Pufferspeicher (25) aufnehmen kann.

2. Anbaugerät (1) nach Anspruch 1, **dadurch gekennzeichnet, dass** das Anbaugerät (1) sich während der Arbeit über mindestens eine Laufrolle (3) gegenüber dem Boden abstützt und ein durch die Antriebseinheit (9) angetriebenes rotierendes Arbeitswerkzeug (4) aufweist.

3. Anbaugerät (1) nach Anspruch 1, **dadurch gekennzeichnet, dass** der in der Antriebseinheit (9) integrierte Pufferspeicher (25) die Antriebseinheit (9) mit elektrischer Energie versorgt.

4. Anbaugerät (1) nach Anspruch 1 oder 3, **dadurch gekennzeichnet, dass** der in der Antriebseinheit (9) integrierte Pufferspeicher (25) auswechselbar ist.

5. Anbaugerät (1) nach einem der vorhergehenden Ansprüche, **dadurch gekennzeichnet, dass** die Antriebseinheit (15) vom Trägerfahrzeug aus mit elektrischer Energie versorgt wird.

6. Anbaugerät (1) nach einem der vorhergehenden Ansprüche, **dadurch gekennzeichnet, dass** zwischen der Antriebseinheit (9) und dem Arbeitswerkzeug (4) wenigstens ein Getriebe (10) zwischengeschaltet ist und die Ausgangsdrehzahl der Antriebseinheit (9) unterschiedlich gegenüber der Drehzahl des Arbeitswerkzeugs (4) ist.

7. Anbaugerät (1) nach einem der vorhergehenden Ansprüche, **dadurch gekennzeichnet, dass** zwischen der Antriebseinheit (9) und dem Arbeitswerkzeug (4) wenigstens ein Kettenantrieb (35) zwischengeschaltet ist und die Ausgangsdrehzahl der Antriebseinheit (9) unterschiedlich gegenüber der Drehzahl des Arbeitswerkzeugs (4) ist.

8. Anbaugerät (1) nach einem der vorhergehenden Ansprüche, **dadurch gekennzeichnet, dass** die Antriebseinheit (9) im Vergleich zum Arbeitswerkzeug (4) eine höhere Drehzahl aufweist.

9. Anbaugerät (1) nach einem der vorhergehenden Ansprüche, **dadurch gekennzeichnet, dass** die Antriebseinheit (9) mit einem Ladegerät (18) verbunden ist welches mittels einer elektrischen Kupplung (21) mit dem Trägerfahrzeug verbunden ist, und den in der Antriebseinheit (9) integrierten Pufferspeicher (25) mit elektrischer Energie versorgt.

10. Anbaugerät (1) nach einem der vorhergehenden Ansprüche, **dadurch gekennzeichnet, dass** die Antriebseinheit (9) mit einem Ladegerät (18) verbunden ist welches mittels einer elektrischen Kupplung (21) mit dem Trägerfahrzeug verbunden ist, und die Antriebseinheit (9) direkt mit elektrischer Energie versorgt.

11. Anbaugerät (1) nach einem der vorhergehenden Ansprüche, **dadurch gekennzeichnet, dass** das Ladegerät (18, 33) unterschiedliche elektrische Spannungen aufnehmen kann.

12. Anbaugerät (1) nach einem der vorhergehenden Ansprüche, **dadurch gekennzeichnet, dass** das Ladegerät (18, 33) verschiedene Gleichspannungen von 12 Volt bis 120 Volt aufnehmen kann.

13. Anbaugerät (1) nach einem der vorhergehenden Ansprüche, **dadurch gekennzeichnet, dass** ein Ladegerät (33) vorgesehen ist, welches direkt einen Energiespeicher (25) aufnehmen und aufladen kann.

14. Anbaugerät (1) nach einem der vorhergehenden Ansprüche, **dadurch gekennzeichnet, dass** das Ladegerät (33) mittels einer elektrischen Kupplung (21) mit dem Trägerfahrzeug verbunden ist und dadurch mit elektrischer Energie versorgt wird.

15. Anbaugerät (1) nach einem der vorhergehenden Ansprüche, **dadurch gekennzeichnet, dass** das Ladegerät (18, 33) mittels einer elektrischen Kupplung (22) mit einem öffentlichen elektrischen Versorgungsnetz verbunden ist und dadurch das Ladegerät (18, 33) mit elektrischer Energie versorgt wird.

16. Anbaugerät (1) nach einem der vorhergehenden Ansprüche, **dadurch gekennzeichnet, dass** auf dem Anbaugerät wenigstens ein Photovoltaikmodul (34) vorgesehen ist, welches mit dem Ladegerät (18, 33) verbunden ist und dadurch das Ladegerät (18, 33) mit elektrischer Energie versorgt.

17. Anbaugerät (1) nach einem der vorhergehenden Ansprüche, **dadurch gekennzeichnet, dass** auf dem Anbaugerät wenigstens ein Photovoltaikmodul (34) vorgesehen ist, welches mit der Antriebseinheit (9) verbunden ist und dadurch die Antriebseinheit (9) mit elektrischer Energie versorgt.

18. Anbaugerät (1) nach einem der vorhergehenden Ansprüche, **dadurch gekennzeichnet, dass** eine Bedieneinheit (26) vorgesehen ist, welches mit der Antriebseinheit (9) verbunden ist und den Elektromotor (36) in der Antriebseinheit (9) ein- bzw. ausschaltet.

19. Anbaugerät (1) nach einem der vorhergehenden Ansprüche, **dadurch gekennzeichnet, dass** die Bedieneinheit (26) auch weitere elektrische Verbraucher ein- bzw. ausschaltet.

20. Anbaugerät (1) nach einem der vorhergehenden Ansprüche, **dadurch gekennzeichnet, dass** eine Steuereinheit (31) vorgesehen ist, welches zum einen mit der Antriebseinheit (9) und zum anderen mit der drahtlosen Bedieneinheit (32) verbunden ist und den Elektromotor (36) in der Antriebseinheit (9) ein- bzw. ausschaltet.

21. Anbaugerät (1) nach einem der vorhergehenden Ansprüche, **dadurch gekennzeichnet, dass** die Steuereinheit (31) über die drahtlose Bedieneinheit (32) auch weitere elektrische Verbraucher ein- bzw. ausschaltet.

22. Anbaugerät (1) nach einem der vorhergehenden Ansprüche, **dadurch gekennzeichnet, dass** das rotierende Arbeitswerkzeug (4) austauschbar ist.

23. Anbaugerät (1) nach einem der vorhergehenden Ansprüche, **dadurch gekennzeichnet, dass** das rotierende Arbeitswerkzeug (4) zum Mulchen von bewachsenen Flächen genutzt wird.

24. Anbaugerät (1) nach einem der vorhergehenden Ansprüche, **dadurch gekennzeichnet, dass** das rotierende Arbeitswerkzeug (4) zum Zerkleinern und Durchmischen von bewachsenem Boden genutzt wird.

25. Anbaugerät (1) nach einem der vorhergehenden Ansprüche, **dadurch gekennzeichnet, dass** das rotierende Arbeitswerkzeug (4) zum Säubern von Flächen genutzt wird.
